# EUROPEAN PATENT APPLICATION

(11) **EP 4 506 277 A1**
(43) Date of publication of application: **12.02.2025**
(21) Application number: 23779055.5
(22) Date of filing: 22.02.2023
(51) Int. Cl.: B65D 81/30, B65D 85/00, C02F 1/00, C02F 1/58, C02F 1/68, C02F 1/70

(54) **PACKAGE IN WHICH AQUEOUS ASCORBIC ACID SOLUTION IS CONTAINED**

(30) Priority: 01.04.2022 JP 2022061932
(71) Applicant: Suntory Holdings Limited, Osaka-shi, Osaka 530-8203 (JP)
(72) Inventor: MASUKO, Sho, Kawasaki-shi, Kanagawa 211-0067 (JP)
(74) Representative: Vossius & Partner Patentanwälte Rechtsanwälte mbB
(86) International application number: PCT/JP2023/006333
(87) International publication number: WO 2023/189025

(57) **Abstract**

The present invention provides a simple means not requiring any time or effort for reducing the smell of chlorine in tap water with the use of ascorbic acid. This package, which contains a liquid composition having an ascorbic acid concentration of 1.0 to 100.0 g/L and an α-terpineol concentration of 5000 ppb or less, while having a solvent component of 90% by volume or more of water, and which is capable of dispensing 0.1 to 10 mL of the liquid composition each time, is used so as to mix the liquid composition into tap water with a dilution factor of 100 to 1000 times.

## Description

### TECHNICAL FIELD

The present invention relates to a package storing an aqueous ascorbic acid solution that enables to reduce smell of chlorine derived from tap water by mixing the solution into the tap water for use.

### BACKGROUND ART

Tap water in the whole of Japan is generally chlorinated. The Water Supply Act in Japan stipulates that chlorinated tap water has to contain residual chlorine at 0.1 mg/L or more. Chlorine is effective from the viewpoint of the safety from infectious diseases and the like, but results in smell of chlorine. Chlorine may therefore be a problem when tap water is directly drunk or used for cooking.

As means for reducing the smell of chlorine of tap water, it is known to boil tap water to remove chlorine. It however requires effort to boil tap water to reduce the smell of chlorine. Accordingly, in general, to obtain tasty water without smell of chlorine, water in plastic bottles is purchased, water purifiers are installed, or water servers are introduced.

It is known that ascorbic acid can reductively decompose free chlorine in tap water to reduce the smell of chlorine. For example, PTL 1 discloses that a tap water deodorant containing cyclodextrin and L-ascorbic acid salt encapsulated in a water-permeable bag, or in the form of powder, granules, or tablets is added to tap water. PTL 2 discloses a foaming preparation consisting of a solid composition containing: a carbon dioxide generating component consisting of either a carbonate or a hydrogencarbonate or a mixture thereof; raffinose that is a trisaccharide in which one molecule of D-galactose, one molecule of D-glucose, and one molecule of D-fructose are bound in this order; and ascorbic acid (vitamin C). PTL 3 discloses a drinking water treatment agent containing L-ascorbic acid, cyclodextrin, glycerin-soluble salts, and glycerin. PTL 4 discloses a vitamin C preparation for forming an aqueous solution for neutralizing residual chlorine in tap water using 2-glucoside ascorbate, which is inferior to ascorbic acid in reduction power.

### CITATION LIST

### PATENT LITERATURE

PTL 1: JP H01-176487 A
PTL 2: JP 2004-26776 A
PTL 3: JP H08-89934 A
PTL 4: JP 2021-17418 A

### SUMMARY OF INVENTION

### TECHNICAL PROBLEM

It is known that ascorbic acid has low storage stability, and ascorbic acid especially in the form of liquid composition is decomposed to lose reduction power during storage. It is also a problem that color of ascorbic acid is changed under oxidative environment due to moisture. Ascorbic acid is therefore commonly used in the form of a solid composition, in which ascorbic acid is mixed with a powdery, granular, or tablet vehicle. Such a solid composition may however have operational problems that, when ascorbic acid is mixed into tap water, it takes time to disperse or dissolve ascorbic acid in tap water; it is difficult to dissolve ascorbic acid uniformly within a short time due to the difference between the solubilities of the components blended; and ascorbic acid is scattered when the ascorbic acid is mixed into tap water.

An object of the present invention is to provide simple and easy means that does not require time or effort in a method for reducing the smell of chlorine of tap water using ascorbic acid being able to reductively decompose residual chlorine in tap water rapidly.

### SOLUTION TO PROBLEM

The present inventors have earnestly examined the above-mentioned problems, consequently obtained an idea of a method for storing an aqueous ascorbic acid solution in a specified concentration range in a predetermined package, and completed the present invention.

That is, the present invention relates to the following.
[1] A package configured to be able to dispense 0.1 to 10 mL of a liquid composition at a time, wherein:
   the package stores the liquid composition;
   the liquid composition contains a solvent component containing water at 90% by volume or more of the solvent component, ascorbic acid at a concentration of 1.0 to 100.0 g/L, and α-terpineol at a concentration of 5000 ppb or less; and
   the liquid composition is for use to be mixed into tap water at a dilution factor of 100 to 1000 times.
[2] The package according to [1], wherein the package has an opening with a size of 0.001 to 5 mm to be opened at the time of dispensing.
[3] The package according to [1] or [2], wherein the package is configured to be able to dispense by spraying or adding dropwise.
[4] The package according to any one of [1] to [3], wherein a volume of the liquid composition stored is 1 to 30 mL.
[5] The package according to any one of [1] to [4], wherein the package is a single-use individual packaging container.
[6] The package according to any one of [1] to [5], wherein the package is a light-shielding container.
[7] The package according to any one of [1] to [6], wherein the package is an oxygen-shielding container.

### ADVANTAGEOUS EFFECTS OF INVENTION

Since the use of a package of the present invention allows mixing a predetermined amount of ascorbic acid with tap water instantly without using a stirrer such as a muddler, tasty tap water reduced in smell of chlorine can be obtained without spending time and effort.

### BRIEF DESCRIPTION OF DRAWINGS

Fig. 1 shows an example in the case where a package is a spraying type container.
Fig. 2 shows an example in the case where a package is a dropwise-dispensing type container.
Fig. 3 shows an example when a package is in the form of a pouch (sachet).

### DESCRIPTION OF EMBODIMENTS

A package storing an ascorbic acid-containing liquid composition (herein also described as an aqueous ascorbic acid solution) at a predetermined concentration of the present invention can reduce the smell of chlorine of tap water rapidly, almost instantly, merely by mixing the ascorbic acid in the package into the tap water at a predetermined dilution factor. The tap water as used herein refers to water containing free chlorine at 0.1 to 1.0 mg/L, preferably 0.2 to 0.8 mg/L, and more preferably 0.3 to 0.6 mg/L. The tap water as used herein shall also include not only water collected from faucets but also water to which sodium hypochlorite (NaClO) is added for sterilizing food and drink for convenience.

The smell of chlorine as used herein refers to a unique smell resulting from "chlorine-containing substance" that is a generic term for hypochlorite ions (ClO⁻), chlorine ions (Cl⁻), and chloramines which are chlorine combined with nitrogen (monochloramine (NH₂Cl), dichloramine (NHCl₂), trichloramine (NCl₃), and the like).

The package of the present invention stores a liquid composition containing ascorbic acid (aqueous ascorbic acid solution). Mixing this aqueous ascorbic acid solution into tap water can decompose hypochlorous acid in tap water to reduce the smell of chlorine. As ascorbic acid, L-ascorbic acid or a salt thereof can be used. Especially a salt of L-ascorbic acid is preferable. An L-ascorbate that can be added to food and drink, can be used. Examples of the L-ascorbate include sodium L-ascorbate, potassium L-ascorbate, calcium L-ascorbate, and magnesium L-ascorbate. Among them, sodium L-ascorbate is an example of the suitable aspects from the viewpoint of flavor (no taste or no smell). L-ascorbic acid or salts thereof can be used alone or in combination of two or more. Since ascorbic acid analogs such as 2-glucoside ascorbate have lower reduction power than ascorbic acid, the ascorbic acid of the present invention does not include ascorbic acid analogs.

As the ascorbic acid, purified L-ascorbic acid or salts thereof are preferably used. Although it is known that citrus fruit juice such as lemon fruit juice contains ascorbic acid (for example, Horticultural Research (Japan) (Hort. Res. (Japan)) 8(3): 273-279. 2009.), citrus fruit juice is not used as the ascorbic acid of the present invention because the citrus flavor, sourness, sweet taste, and the like influence the flavor of tap water and may result in the departure from the expected object of the present invention that is to provide tasty water.

The present inventors have found that a chemical smell resulting from α-terpineol, which is one of monoterpene alcohols represented by C₁₀H₁₈O, has the effect of enhancing the smell of chlorine. Accordingly, the α-terpineol concentration in the liquid composition containing ascorbic acid is controlled to preferably 5000 ppb or less, more preferably 500 ppb or less, further preferably 100 ppb or less, and particularly preferably 50 ppb or less. The α-terpineol concentration may be 0 ppb. α-Terpineol is a very small amount of an essential oil component in citrus fruits, and is commonly contained in fruit juice thereof. It is unsuitable to use citrus fruit juice as ascorbic acid also from the viewpoint of controlling α-terpineol to low concentration.

According to the present invention, the above-mentioned ascorbic acid is used in the form of a liquid composition containing water as the main component (aqueous ascorbic acid solution) to be mixed with tap water. Since the mixing is performed in the form of liquid mixing of tap water as a liquid and an aqueous ascorbic acid solution as a liquid (liquid-liquid mixing), the uniform quick reaction can be performed in the water, and the smell of chlorine can be rapidly reduced. Since ascorbic acid is less scattered in the liquid mixing than in the powder-liquid mixing using powdery ascorbic acid, the liquid mixing is well handleable, and is advantageous in that tasty tap water can be steadily obtained with high reproducibility.

In the present invention, the solvent in the liquid composition containing ascorbic acid (aqueous ascorbic acid solution) contains water as the main component. Containing water as the main component refers to containing water at 90% by volume or more, preferably 95% by volume or more, more preferably 98% by volume or more, further preferably 99% by volume or more of the solvent component. Although ascorbic acid is also dissolved in alcohol such as the ethanol or polyhydric alcohol such as glycerin or propylene glycol, these solvents may reduce the surface tension of the aqueous ascorbic acid solution to be disadvantageous for forming droplets for high dispersion described below. Accordingly, it is preferable that the composition do not contain any alcohol or any polyhydric alcohol. Even if the composition contains alcohol or polyhydric alcohol, the total volume thereof is preferably less than 5% by volume, more preferably less than 2% by volume, and further preferably less than 1% by volume of the whole solvent in the aqueous ascorbic acid solution.

The package of the present invention is configured to allow dispense of the aqueous ascorbic acid solution in a volume as small as 0.1 to 10 mL at a time. Mixing the aqueous ascorbic acid solution in a volume as small as 0.1 to 10 mL at a time into tap water having 100 to 1000 times the volume thereof can result in quick mixing of the solution with the tap water. In the package that is configured to be able to dispense 0.1 to 10 mL of the aqueous ascorbic acid solution, an opening, which corresponds to a dispensing part, preferably has a size of 0.001 to 5 mm and preferably 0.01 to 2 mm. Dispensing the aqueous ascorbic acid solution from the small opening in a misty form or a water drop form can mix the solution with tap water in a moment. If the opening is circular, the size of the opening as used herein means the length in the diameter direction. If the package is in the form of a pouch (sachet) or the like, the size means the greatest length of the opening on a portion cutting off.

As the container that is configured to be able to dispense the aqueous ascorbic acid solution stored in the package in small amounts, a package including a mechanism that can dispense by spraying or adding dropwise can be suitably exemplified. Since the aqueous ascorbic acid solution is atomized by the spraying mechanism or dropwise-dispensing mechanism, the solution is highly dispersed and quickly mixed into tap water. Droplets of the aqueous ascorbic acid solution dispensed from the package has an average particle size of preferably 1 mm or less, more preferably 0.5 mm or less, and further preferably 0.1 mm or less.

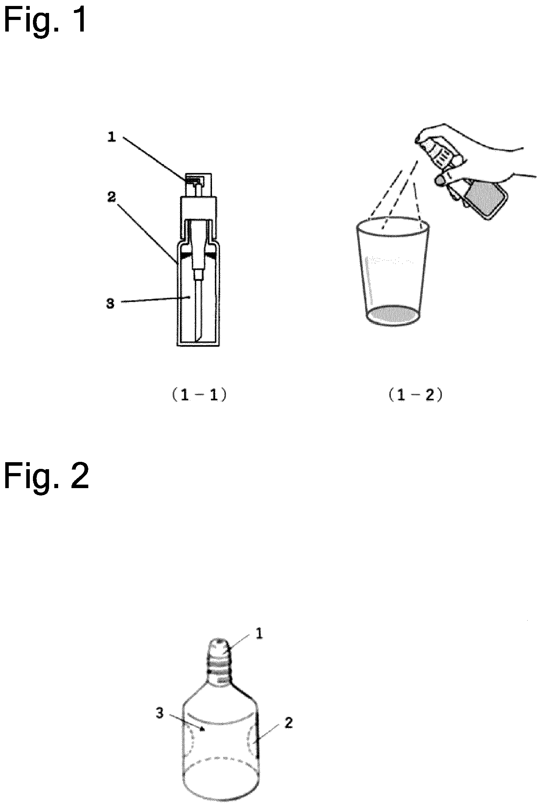

As the spraying container that is an example of the package including the spray dispensing mechanism, exemplified are, for example, as shown in Fig. 1, a spray bottle container that can spout an aqueous ascorbic acid solution 3 stored in the container from a fine nozzle pore on the nozzle tip in a misty form by moving a head 1 to be pushed down having the nozzle; and an aerosol can container that is filled with propellant such as nitrogen or carbon dioxide that assists the spraying, and sprays the aqueous ascorbic acid solution in a constant amount together with the propellant and the like. Examples of the package including the spray dispensing mechanism filled with propellant include a package in the form of a cap to fit the mouth of another container (bottle) containing tap water as described in JP 2009-535269 A and JP 2014-520045 A. After the package is attached as the cap for the bottle containing tap water, upon turning the cap, the ascorbic acid container in the cap is pressed out of a chamber by the pressure of propellant to mix the solution with the tap water in the bottle in a moment. As the propellant, nitrogen gas is suitably used from the viewpoint of the stability of the aqueous ascorbic acid solution.

As the dropwise-dispensing type container that is an example of the package including the dropwise-dispensing mechanism, exemplified are a bottle container that can dispense an aqueous ascorbic acid solution 3 stored therein from a dropping nozzle 1 several drops (around 0.1 mL) at a time by pushing a container body 2 with fingers and the like as shown in Fig. 2; and a container having a liquid stopping function that can dispense around 0.1 to 3 mL as droplets at a time as shown in JP Utility Model publication No. H07-44730.

As described above, the package of the present invention mixes the aqueous ascorbic acid solution in a volume as small as 0.1 to 10 mL at a time into tap water having 100 to 1000 times the volume thereof. The ascorbic acid concentration in the aqueous ascorbic acid solution is 1.0 to 100.0 g/L, preferably 3.0 to 90.0 g/L, and more preferably 10.0 to 70.0 g/L. If ascorbic acid is mixed into tap water at an ascorbic acid concentration out of the range of 1.0 to 100.0 g/L, the sourness and the acridity peculiar to ascorbic acid may be felt, or an enough effect of reducing the smell of chlorine may not be obtained, depending on the dilution factor.

In order to measure ascorbic acid in a volume as small as 0.1 to 10 mL at a time, the package is preferably a single-use individual packaging container storing the volume for one use. Such a container is preferable not only from the viewpoint that the use of the container can mix the aqueous ascorbic acid solution into tap water simply and easily without requiring the weighing thereof but also from the viewpoint of the stability of the aqueous ascorbic acid solution. If the single-use packaging container is used as the package, the volume of the aqueous ascorbic acid solution stored in the package is preferably around 1 to 10 mL, further preferably around 1.5 to 5 mL, and more preferably around 2 to 3 mL.

A non-single-use container that is capable of taking out a predetermined amount without weighting is also a preferable aspect. Examples of such container include a spraying container with a mechanism that allows adjusting the spray volume, and a dropwise-dispensing type container that allows dispensing dropwise a predetermined volume. In these cases, the volume of the aqueous ascorbic acid solution to be mixed into tap water at a time (spray volume at a time or predetermined droplet volume) is preferably around 0.1 to 5 mL and further preferably around 0.2 to 3 mL. The package usually stores these volumes to be mixed at a time multiplied by the numbers of uses. The volume of the aqueous ascorbic acid solution stored in the package in this case is 30 mL or less and preferably 20 mL or less, from the viewpoint of the stability of the aqueous ascorbic acid solution.

It is important to keep the viscosity of the aqueous ascorbic acid solution in the package down to low viscosity in order to control the size of droplets of the aqueous ascorbic acid solution to be dispensed from a package to 1 mm or less and in order to discharge the aqueous ascorbic acid solution in the whole predetermined volume fully. The viscosity at 20°C by a rotary viscometer (60 rpm) is specifically preferably 10 mPa•s or less, more preferably 5 mPa•s or less, and further preferably 3 mPa•s or less. The lower limit of the viscosity is the viscosity of water, which is around 1 mPa•s.

The package of the present invention only has to store the aqueous ascorbic acid solution in a volume as small as 0.1 to 10 mL at a time multiplied by the number of one or more uses. Specifically, the package only has to store around 0.1 to 30 mL of the aqueous ascorbic acid solution. Since such a package is a small container, the package is advantageous in that the package is easily carried, and the solution can be added to tap water for use as needed anywhere and anytime.

The package of the present invention is preferably in a form insusceptible to light or oxygen and the like, and is preferably a light-shielding and/or oxygen-shielding container in view of the storage stability of the aqueous ascorbic acid solution. The light-shielding container having an ultraviolet transmittance of 0% or more and 5.0% or less at a wavelength of 400 nm is suitable. Specifically, exemplified are bottles and pouches (sachets) of synthetic resin materials subjected to light-shielding treatment and cans (bottles) and pouches (sachets) made of steel or aluminum. The synthetic resin material subjected to the light-shielding treatment may be a material containing a synthetic resin into which an ultraviolet absorber is kneaded, a material bonded to a synthetic resin film into which an ultraviolet absorber is kneaded, a material coated with an ultraviolet absorber, or a material bonded to a synthetic resin film coated with an ultraviolet absorber. The ultraviolet absorber usable in food containers can be appropriately selected. The transmittance of visible light at a wavelength of 500 nm may be any transmittance, and the light-shielding container may scarcely transmit visible light, or may transmit visible light, for example, at a transmittance of 80% or more and 100% or less.

As the oxygen-shielding container, exemplified are bottles and pouches (sachets) made of steel, aluminum, or glass, and bottles or pouches (sachets) of synthetic resin materials having oxygen gas barrier properties. Examples of the oxygen gas barrier resin include an ethylene-vinyl alcohol copolymer and MXD6 nylon.

As long as the expected object of reducing the smell of chlorine to provide tasty tap water is not deteriorated, other components to be used in beverages, specifically smell-less components (preferably tasteless and smell-less components), can be blended into the liquid composition in the package of the present invention besides ascorbic acid at the predetermined concentration. Since it is preferable that the appearance can remain colorless and transparent, it is preferable not to blend any component that is browned by heat and the like (for example, cyclodextrin). Since a reduction in the surface tension of the aqueous ascorbic acid solution may prevent droplets from being dispersed, it is preferable to select components and the amounts thereof having as little influence on the surface tension as possible. For example, the blending of an alkali component (alkali component such as sodium hydroxide, sodium silicate, sodium hydrogen carbonate, or sodium carbonate) reduces clusters of water molecules in size, and the effect of mildening tap water is expected. However, it causes decrease of the surface tension, and the decrease may be disadvantageous for forming droplets to be highly dispersed in tap water. The amount of the alkali component blended is preferably adjusted such that the pH of the liquid composition is 10.0 or less and more preferably such that the pH is 9.5 or less. Since an acid component may also have an influence on the surface tension, the lower limit of the pH of liquid composition is preferably 6.5 and more preferably 7.0.

### EXAMPLES

Hereinafter, the present invention will be described in further detail by showing Examples. The present invention is not, however, limited to the following Examples. The present invention can be modified to be implemented. Components and physical properties in the present Examples were measured by the following methods.

### <Measurement of residual chlorine>

10 mL of a sample was collected, and the total chlorine was measured with the residual chlorine meter type 58700-00 (DPD method) (available from Hach Company).

### <Measurement of ascorbic acid concentration>

To 1 to 5 g of each sample was added 5% metaphosphoric acid solution for dilution. After the centrifugation and filtration thereof, 1 mL of the filtrate was collected in a small test tube. After the addition of 1 mL of a 5% metaphosphoric acid solution, 100 µL of 0.2% dichlorophenolindophenol solution and 2 mL of 2% thiourea-5% metaphosphoric acid solution were added, and 0.5 mL of 2% 2,4-dinitrophenylhydrazine-4.5 mol/L sulfuric acid was added thereto, and the mixture was reacted at 38 to 42°C for 16 hours. After the reaction, the mixture was extracted with 3 mL of ethyl acetate (shaken for 60 minutes), dried over anhydrous sodium sulfate, and subjected to HPLC analysis. The analysis conditions for the HPLC are as follows.
- HPLC apparatus: LC-10AS (available from SHIMADZU CORPORATION)
- Detection: UV-VIS detector (wavelength: 495 nm), SPD-10AV (available from SHIMADZU CORPORATION)
- Column: Senshupak Silca-1100 (4.6 mm × 100 mm)
- Column temperature: 35°C
- Mobile phase: Mixed solution of ethyl acetate-hexane-acetic acid-water (60:40:5:0.05)
- Flow speed: 1.5 mL/min

### <Measurement of pH>

100 mL of the sample was measured into a 300-mL beaker. The pH was measured using the HORIBA pH meter F21 (available from HORIBA, Ltd.) with the temperature adjusted to 20°C.

### <Measurement of viscosity>

Each sample stored at 20°C for 24 hours was measured for viscosity at a rotation speed of 60 rpm after 60 seconds with a Brookfield rotational viscometer (type B8L) and a BL adapter.

### Experiment 1. Effect of reducing smell of chlorine with aqueous ascorbic acid solution (1)

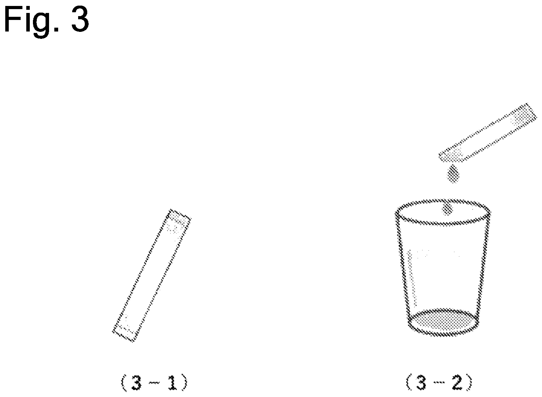

First, 30 g of sodium L-ascorbate was uniformly dissolved in 1 L of pure water (25°C) with stirring. This was heat-sterilized to obtain an aqueous ascorbic acid solution at a concentration of 22.2 g/L. Then, 2 mL of this was filled into each stick aluminum bag (pouch) for packaging food having light shielding effect and barrier properties as an individual packaging container, and the bag was sealed with a heat sealer in a sterilized space (refer to Fig. 3). A sealed portion was cut off so that the size of the opening was 1 mm. The whole volume thereof was added dropwise into a glass containing 200 mL of tap water to prepare tap water containing the aqueous ascorbic acid solution (sample P1). As the tap water, tap water (free chlorine concentration was 0.4 mg/L) from Kawasaki City, Kanagawa Prefecture in Japan was used. Then, 0.05 mg of powdered sodium L-ascorbate was weighed on a weighing paper, and the whole volume thereof was sprinkled into a glass containing 200 mL of the tap water to prepare tap water containing ascorbic acid (sample R), which was used as the comparison. Neither sample P1 nor R contained α-terpineol.

The tap water in which sodium L-ascorbate was mixed (samples P1 and R) and commercial mineral water (sample Q) were sensorily evaluated. In the evaluation, twenty-seven panelists who drank commercial mineral water 5 days or more per week were divided into groups each consisting of nine panelists at random, and the samples P1, Q, and R were assigned to each group and drunk. The panelists performed a double-blind trial in which the assigned samples were blinded. After the drinking, each water sample was evaluated for purchase intention in view of the strength of the smell of chlorine and the like on a seven-grade scale of -3 to +3 (+3 points: Much inclined to buy, +2 points: Inclined to buy, +1 point: Slightly inclined to buy, 0 points: Not sure, -1 point: Slightly reluctant to buy, -2 points: Reluctant to buy, -3 points: Never buy).

Table 1 shows the evaluation results (the numbers of panelists). The products of the evaluation scores and the evaluation numbers of panelists were calculated to determine the total scores thereof as the total scores in the table. As is clear from Table 1, the sample P1 into which the aqueous ascorbic acid solution was mixed causes greater purchase intention than the sample R into which powdery ascorbic acid was mixed.

**[Table 1]**

| | +3 | +2 | +1 | 0 | -1 | -2 | -3 | Total score |
|---|---|---|---|---|---|---|---|---|
| P1 Containing aqueous ascorbic acid solution | 1 | 1 | 3 | 1 | 1 | 1 | 0 | +3 |
| R Containing ascorbic acid | 0 | 0 | 1 | 1 | 5 | 1 | 1 | -9 |
| Q Mineral water (Commercial item) | 1 | 3 | 2 | 2 | 1 | 0 | 0 | +10 |

### Experiment 2. Effect of reducing smell of chlorine with aqueous ascorbic acid solution (2)

Aqueous ascorbic acid solutions in stick aluminum bags were prepared in the same way as the sample P1 in Experiment 1 except that the weight of sodium L-ascorbate was changed from 30 g to 1 g, 1.5 g, 5 g, 15 g, 60 g, 90 g, 120 g, and 150 g. The ascorbic acid concentrations are as shown in Table 2. All the viscosities of the samples were 1.5 to 2.5 mPa•s. The whole amount of the sample P1 in Experiment 1 that contains ascorbic acid at a concentration of 22.2 g/L, and the whole amounts of the samples P2 to P9 were added dropwise into a glass containing 200 mL of the tap water, respectively, in the same way as in Experiment 1, and namely the samples were mixed into the tap water at a dilution factor of 100 times. These aqueous ascorbic acid solutions were sensorily evaluated. In the evaluation, pairs of the samples P1 to 9 and a control (merely the tap water) were provided to nine panelists who drank commercial mineral water 5 days or more per week. The panelists evaluated which of each shown pair felt tastier by two-point discrimination tests.

Table 2 shows the results. The samples P1 and P3 to P9, containing ascorbic acid at concentrations of 1.0 g/L or more, had less smell of chlorine than the tap water (additive-free) as the control, and more than half of the panelists estimated that the sample beverages were tasty. If the ascorbic acid concentration in the aluminum bag exceeded 110 g/L, some panelists estimated that although the sample beverages did not smell of chlorine, the sample beverages felt acrid, and were difficult to drink.

**[Table 2]**

| | Ascorbic acid concentration in aluminum package (g/L) | The number of panelists indicating that sample water is tastier than control |
|---|---|---|
| Sample P1 | 22.2 | 8/9 |
| Sample P2 | 0.7 | 4/9 |
| Sample P3 | 1.1 | 5/9 |
| Sample P4 | 3.8 | 6/9 |
| Sample P5 | 11.0 | 7/9 |
| Sample P6 | 44.6 | 9/9 |
| Sample P7 | 66.8 | 9/9 |
| Sample P8 | 89.0 | 7/9 |
| Sample P9 | 110.1 | 5/9 |

### Experiment 3. Effect of reducing smell of chlorine with aqueous ascorbic acid solution (3)

The aqueous ascorbic acid solutions were added dropwise in the same way as in Experiment 2 except that the tap water into which the aqueous ascorbic acid solutions would be added were changed from the glasses containing 200 mL of the tap water to pots containing 2 L of the tap water. That is, the solutions were mixed into the tap water at a dilution factor of 1000 times. Then, 100 mL of the tap water containing the aqueous ascorbic acid solution was poured into every glasses and sensorily evaluated in the same way as in Experiment 2.

Table 3 shows the results. More than half of the panelists estimated that the tap water into which the aqueous ascorbic acid solutions were added dropwise was reduced in smell of chlorine and tasty also in the case of 1000 times dilution.

**[Table 3]**

| | Ascorbic acid concentration in aluminum package (g/L) | The number of panelists indicating that sample water is tastier than control |
|---|---|---|
| Sample P1 | 22.2 | 6/9 |
| Sample P5 | 11.0 | 5/9 |
| Sample P6 | 44.6 | 9/9 |
| Sample P7 | 66.8 | 9/9 |
| Sample P8 | 89.0 | 8/9 |

### Experiment 4. Influence of opening size (1)

The whole volume of the sample P6 in Experiment 3 was dispensed into 2 L of the tap water in the same way as in Experiment 3 except that the opening size of the stick aluminum bag storing the aqueous ascorbic acid solution was changed into 0.5 mm, 2 mm, 5 mm, and 10 mm. The tap water samples containing the aqueous ascorbic acid solution were obtained and sensorily evaluated in the same way as in Example 3. The aqueous ascorbic acid solution dispensed from the stick aluminum bags to the tap water in the pots was mixed only spontaneously without using any stirring tool such as any muddler.

Table 4 shows the results. Presumably since the opening with a size of 2 mm or less allows addition of the solution in the form of water droplets to highly disperse the solution into the tap water, all the panelists estimated that the water samples having the opening with a size of 2 mm or less were reduced in smell of chlorine as compared with the control.

**[Table 4]**

| | Opening size (mm) | The number of panelists indicating that sample water is tastier than control |
|---|---|---|
| Sample P6 | 1 | 9/9 |
| | 2 | 9/9 |
| | 5 | 7/9 |
| | 10 | 6/9 |

### Experiment 5. Influence of opening size (2)

First, 60 g of sodium L-ascorbate was uniformly dissolved in 1 L of pure water (25°C) with stirring. This was heat-sterilized to obtain an aqueous ascorbic acid solution at a concentration of 44.6 g/L (sample P6). Then, 20 mL of the solution was filled into each of a spraying container and a dropwise-dispensing type container for packaging food having light-shielding and barrier properties shown in Figs. 1 and 2. The spraying container has an opening with a size of 0.02 mm, and is an aerosol can with a mechanism that dispenses 2 mL of the solution together with nitrogen gas by one push. The dropwise-dispensing container has an opening with a size of 0.5 mm, and includes a mechanism that can dispense the solution drop by drop (around 0.04 mL each). Then, 2 mL of the aqueous ascorbic acid solution was dispensed into the tap water (2 L) in each pot by spraying (one push) or adding dropwise (five drops). Then, 100 mL of the water was poured into every glass from the pots without using any stirring tool such as a muddler and evaluated in the same way as in Experiment 3.

Table 5 shows the results. The aqueous ascorbic acid solution dispensed by spraying or adding dropwise was highly dispersed without using any stirring tool such as any muddler, and reduced the smell of chlorine of the tap water effectively.

**[Table 5]**

| | Opening size (mm) | The number of panelists indicating that sample water is tastier than control |
|---|---|---|
| Sample P6 | 0.5 | 9/9 |
| | 0.02 | 9/9 |

## Claims

1. A package configured to be able to dispense 0.1 to 10 mL of a liquid composition at a time, wherein:
the package stores the liquid composition;
the liquid composition comprises a solvent component comprising water at 90% by volume or more of the solvent component, ascorbic acid at a concentration of 1.0 to 100.0 g/L, and α-terpineol at a concentration of 5000 ppb or less; and
the liquid composition is for use to be mixed into tap water at a dilution factor of 100 to 1000 times.

2. The package according to claim 1, wherein the package comprises an opening with a size of 0.001 to 5 mm to be opened at the time of dispensing.

3. The package according to claim 1 or 2, wherein the package is configured to be able to dispense by spraying or adding dropwise.

4. The package according to claim 1 or 2, wherein a volume of the liquid composition stored is 1 to 30 mL.

5. The package according to claim 1 or 2, wherein the package is a single-use individual packaging container.

6. The package according to claim 1 or 2, wherein the package is a light-shielding container.

7. The package according to claim 1 or 2, wherein the package is an oxygen-shielding container.
